# EUROPÄISCHE PATENTSCHRIFT

(11) **EP 2 301 409 B1**
(45) Veröffentlichungstag und Bekanntmachung des Hinweises auf die Patenterteilung: **17.12.2014**
(21) Anmeldenummer: 10014534.1
(22) Anmeldetag: 12.11.2010
(51) Int. Cl.: A47L 15/42, A47L 15/48

(54) **Geschirrspüler mit Sorptionsmedium und Frischluftzufuhr**
Dishwasher with sorption medium and fresh air feed
Lave vaisselle avec élément de sorption et l'introduction de l'air

(43) Veröffentlichungstag der Anmeldung: 30.03.2011
(73) Patentinhaber: V-Zug AG, CH-6301 Zug (CH)
(72) Erfinder: Maier-Laxhuber, Peter, 85276 Pfaffenhofen (DE); Schmidt, Ralf, 85354 Freising (DE); Gisler, Jürg, 6105 Schachen (CH); Dober, Ernst, 6036 Dierikon (CH); Loichinger, Albert Johann, 8135 Langnau am Albis (CH); Rother, Janine, 8045 Zürich (CH)
(74) Vertreter: Sutter, Kurt

(56) Entgegenhaltungen:
- DE-A1- 10 353 774
- DE-A1-102005 004 089

## Beschreibung

### Gebiet der Erfindung

Die Erfindung betrifft einen Geschirrspüler mit einem Sorptionsmedium, mit welchem Wasser unter Wärmeabgabe sorbierbar und unter Heizen desorbierbar ist, sowie ein Verfahren zum Betrieb eines solchen Geschirrspülers.

### Hintergrund

Sorptionsmedien dieser Art, beispielsweise in der Form von Zeolith, können in Geschirrspülern dazu eingesetzt werden, während der Trocknung des Geschirrs der Prozessluft Feuchte zu entziehen. Zu diesem Zweck ist ein Luftkreislauf vorgesehen, um die Luft während der Trocknung des Geschirrs zwischen dem Bottich und dem Sorptionsmedium zirkulieren zu lassen (Sorptionsphase). Bei der Sorption der Feuchte im Sorptionsmedium wird Wärme frei, welche den Trocknungsprozess unterstützt. Um das Sorptionsmedium zu regenerieren, d.h. um die Feuchte aus dem Sorptionsmedium zu desorbieren, ist eine Heizung vorgesehen, mit welcher das Sorptionsmedium erwärmt werden kann.

Ein derartiges Gerät wird z.B. in DE 20 2008 011 159 U beschrieben. Um dem Sorptionsmedium die Feuchte zu entziehen (Regenerierung, Desorptionsphase) wird z.B. zu Beginn eines Reinigungsprozesses Prozessluft durch den Luftkreislauf gepumpt. Vor Eintritt in das Sorptionsmedium wird diese Prozessluft geheizt, und mit der heissen Luft wird dem Sorptionsmedium Wasser entzogen. Die geheizte, feuchte Luft gelangt sodann zurück in den Bottich, wo die Feuchtigkeit mindestens teilweise auskondensieren kann.

DE 10353774 beschreibt ein Gerät gemäss Oberbegriff von Anspruch 1.

### Darstellung der Erfindung

Es stellt sich vor diesem Hintergrund die Aufgabe, einen Geschirrspüler sowie ein Verfahren zu dessen Betrieb bereitzustellen, mit denen eine hohe Prozesseffizienz erreicht werden kann.

Diese Aufgabe wird vom Geschirrspüler und vom Verfahren gemäss den unabhängigen Ansprüchen gelöst.

Demgemäss ist der Geschirrspüler dazu ausgestaltet, in der Sorptionsphase Luft zwischen dem Bottich und dem Sorptionsmedium zirkulieren zu lassen, um auf diese Weise Feuchte aus dem Bottich auszutragen. Hierzu ist, wie bei bekannten Lösungen, ein Trockenkreislauf vorgesehen, in welchem zum Trocknen des Spülguts Luft zwischen Bottich und Sorptionsmedium zirkuliert werden kann. Erfindungsgemäss wird dieser Tockenkreislauf jedoch nicht zur Desorption der Feuchte, d.h. zur Regenerierung des Sorptionsmaterials, eingesetzt. Vielmehr ist zu diesem Zweck eine Frischluftzuführung vorgesehen, mit der Frischluft durch das Sorptionsmedium in den Bottich geführt werden kann. Der Geschirrspüler ist nun dazu ausgestaltet, in der Desorptionsphase dem Sorptionsmedium Wärme zuzuführen und über die Frischluftzuführung Frischluft durch das Sorptionsmedium in den Bottich zu leiten. Auf diese Weise kann die Feuchte aus dem Sorptionsmedium mit der Frischluft ausgetragen werden.

Indem nicht zirkulierte Luft, sondern Frischluft für die Desorption verwendet wird, kann das Sorptionsmedium besser getrocknet werden, denn Frischluft besitzt beim Eintritt in das Sorptionsmedium einen geringeren Feuchtegehalt als Luft, die zwischen dem Bottich und dem Sorptionsmedium zirkuliert wird.

Anspruchsgemäss ist ein Wasserbehälter vorgesehen, welcher thermisch mit dem Sorptionsmedium gekoppelt ist und von dem Wasser in den Bottich geleitet werden kann. In diesem Fall kann das Gerät dazu ausgestaltet sein, in (z.B. gegen Ende) oder insbesondere nach der De-sorptionsphase Wasser in den Wasserbehälter zu leiten, um dieses zu erwärmen. Sodann kann das erwärmte Wasser in den Bottich geführt werden. Auf diese Weise kann die im Sorptionsmedium nach der Regenerierung verbleibende Wärme genutzt werden, um den Bottich bzw. das Geschirr und das Prozesswasser zu erwärmen.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine erste Ausführung eines Geschirrspülers und
Fig. 2 eine zweite Ausführung eines Geschirrspülers.

### Wege zur Ausführung der Erfindung

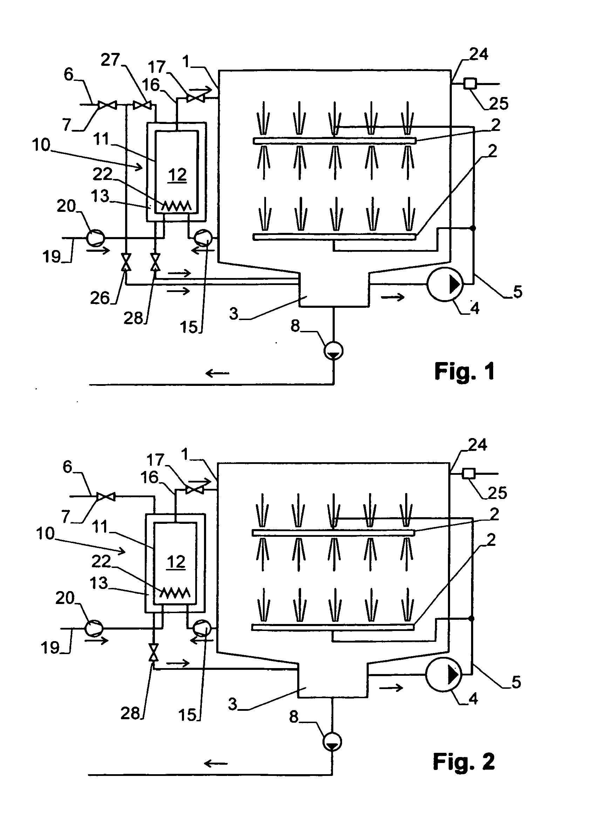

Der in Fig. 1 dargestellte Geschirrspüler besitzt einen Bottich 1 zur Aufnahme des Spülguts. Hierzu sind im Bottich 1 in bekannter Weise Geschirrkörbe vorgesehen (nicht gezeigt). Im Bottich 1 sind weiter z.B. zwei drehbare Sprüharme 2 angeordnet, mit denen Prozesswasser in den Bottich 1 eingebracht werden kann. Um Prozesswasser aus dem Sumpf 3 des Bottichs zu den Sprüharmen 2 zu fördern, ist eine Zirkulationspumpe 4 vorgesehen, welche das Prozesswasser durch eine Zirkulationsleitung 5 fördert. Weiter umfasst das Gerät nach Fig. 1 eine Frischwasserzufuhr 6, von welcher über ein Ventil 7 und eine nicht eingezeichnete, optionale Wasseraufbereitung (Enthärtung) dem Gerät Frischwasser zugeführt werden kann, sowie eine Ablaufpumpe 8, mit welcher verbrauchtes Prozesswasser abgeführt wird.

Das vorliegende Gerät besitzt einen Sorptionstrockner 10. Der Sorptionstrockner 10 kann z.B. im Sockelraum, an der Bottichrückwand, an einer Bottichseitenwand oder in der Türe des Geschirrspülers angeordnet sein, oder gar ausserhalb des Geschirrspülers in einem Nebenfach. Er weist eine Sorptionskammer 11 auf, in welcher ein Sorptionsmedium 12 angeordnet ist. Unter Sorptionsmedium ist dabei ein Material zu verstehen, mit welchem in einem reversiblen Prozess Wasser unter Wärmeabgabe sorbierbar und unter Heizen desorbierbar ist. Vorzugsweise besteht das Sorptionsmedium mindestens teilweise aus Zeolith.

Um die Sorptionskammer 11 herum ist ein Wasserbehälter 13 angeordnet, welcher thermisch mit dem Sorptionsmedium möglichst gut gekoppelt ist. In der Ausführung nach Fig. 1 wird dies beispielsweise dadurch erreicht, dass die Sorptionskammer 11 im Wasserbehälter 13 angeordnet ist, so dass das Wasser im Wasserbehälter die Sorptionskammer 11 im Wesentlichen allseitig umschliessen kann. Eine Anordnung, bei welcher die Sorptionskammer 11 mindestens teilweise vom Wasserbehälter 13 umgeben ist, zeichnet sich durch gute thermische Kopplung zwischen Sorptionskammer 11 bzw. Sorptionsmedium 12 und Wasserbehälter 13 aus.

Weiter besitzt das Gerät einen Trockenkreislauf umfassend einen Trockenluftventilator 15 und eine Rückführleitung 16 mit einem Rückführventil 17. Ist der Trockenluftventilator 15 in Betrieb und das Ventil 17 offen, so wird Prozessluft aus dem Bottich 1 in das Sorptionsmedium 12 geführt und gelangt über Rückführleitung 16 und Rückführventil 17 wieder zurück in den Bottich 1, wodurch ein geschlossener Kreislauf gebildet wird.

Zusätzlich ist eine Frischluftzuführung umfassend eine Zufuhrleitung 19 und einen Frischluftventilator 20 vorgesehen. Ist das Rückführventil 17 offen, so kann dem Bottich 1 über die Frischluftzuführung Frischluft über das Sorptionsmedium 12 zugeführt werden.

Eine Heizung 22 dient dazu, das Sorptionsmedium 12 zu heizen. Die Heizung 22 befindet sich vorzugsweise im Sorptionsmedium, und zwar dort, wo die Zufuhrleitung 19 in die Sorptionskammer 11 mündet. Die Heizung 22 kann allerdings auch ausserhalb des Sorptionsmediums 12 angeordnet werden, z.B. in der Zufuhrleitung 19.

Das Wasser von der Frischwasserzufuhr 6 und von Ventil 7 kann über ein Ventil 26 direkt in den Bottich 1 eingeführt werden. Alternativ kann es über ein Ventil 27 dem Wasserbehälter 13 und von dort über ein Ventil 28 in den Bottich 1 geführt werden.

Schliesslich ist am Bottich 1 in bekannter Weise eine Auslassöffnung 24 vorgesehen, über welche Prozessluft über eine Kondensationsvorrichtung 25 aus dem Bottich 1 an die Umgebung abgegeben kann. Die Kondensationsvorrichtung 25 dient dazu, der über Auslassöffnung 24 entweichenden Luft Feuchte zu entziehen.

Ein Reinigungsprozess für Spülgut kann beim Gerät nach Fig. 1 z.B. in folgenden Schritten ablaufen:
- Ein Menge an Frischwasser wird über die Ventile 7 und 26 in den Bottich 1 gefüllt. Die Menge ist so bemessen, dass sie bis auf eine Restmenge von z.B. 0.5 Litern einem vollständigen Badinhalt für die im Folgenden erwähnte Spülphase entspricht.
- Es wird sichergestellt, dass der Wasserbehälter 13 leer ist, z.B. indem das Ventil 28 mindestens vorübergehend geöffnet wird. (In der weiter unten beschriebenen Desorptionsphase sollte der Wasserbehälter 13 möglichst leer sein.)
- Das Wasser im Bottich 1 wird über die Zirkulationspumpe 4 sporadisch umgewälzt, damit Schmutz am Geschirr eingeweicht wird.
- Die Heizung 22 wird in Betrieb genommen, womit die Desorptionsphase beginnt. Während dieser Desorptionsphase verbleibt das Wasser, das vorher dem Bottich zugeführt worden ist, im Bottich. Am Anfang der Desorptionsphase wird noch keine Frischluft zugeführt, d.h. Frischluftventilator 20 bleibt vorzugsweise ausgeschaltet. Es ist auch denkbar, ihn intervallweise kurzzeitig zu betreiben, um die Wärme besser im Sorptionsmedium zu verteilen. Erst wenn die Temperatur im Sorptionsmedium eine vorgegebene Temperaturschwelle erreicht hat, welche für eine effiziente Desorption ausreicht, wird der Frischluftventilator 20 vorzugsweise dauernd eingeschaltet und dem Sorptionsmedium 12 Frischluft zugeführt. Die Temperaturschwelle liegt im Bereich von 150 - 350 °C, vorzugsweise bei ca. 220°C. Nun wird die Wärme auf das ganze Sorptionsmedium verteilt, die Luft erwärmt sich und nimmt die aus dem Sorptionsmedium 12 austretende Feuchtigkeit auf. Das Ventil 17 muss nun geöffnet sein (während dem vorangehenden Heizen konnte es geöffnet oder geschlossen sein). Das Umwälzen des Wassers über Zirkulationspumpe 4 wird in dieser Phase vorzugsweise ausgesetzt. Nach der Feuchteaufnahme tritt die Luft durch Leitung 16 und Ventil 17 in den Bottich 1, wo sie abkühlt und auskondensiert. Damit werden Bottich, Spülgut und Wasser erwärmt. Sodann tritt die Luft über die Austrittsöffnung 24 und die Kondensationsvorrichtung 25 wieder aus dem Bottich 1 aus. Der Luftvolumenstrom kann in dieser Phase recht klein gehalten werden, was es erlaubt, sehr hohe Temperaturen im Sorptionsmedium 12 zu erreichen.
- Sobald das Sorptionsmedium 12 trocken ist, z.B. nach ca. 2 - 10 Minuten, werden der Frischluftventilator 20 abgeschaltet und Ventil 17 geschlossen. Das wasser im Bottich 1 kann wieder über Zirkulationspumpe 4 umgepumpt werden.
- Über die Ventile 7 und 27 wird nun die oben erwähnte Restmenge an Wasser in den Wasserbehälter 13 geführt, damit dem Sorptionsmedium 12 und der Sorptionskammer 1 die dort verbleibende Wärme mindestens teilweise entzogen werden kann. Wenn sich dieses Wasser genügend erwärmt hat, kann es durch Öffnen des Ventils 28 dem Bottich 1 zugeführt werden.
- Nun beginnt der eigentliche Spülprozess. Falls nötig, kann hierbei die Temperatur des Wassers im Bottich 1 mit einer zweiten Heizung, welche z.B. an der Zirkulationsleitung 5 oder der Zirkulationspumpe 4 angeordnet ist, noch weiter erwärmt werden.
- Nach dem Spülprozess wird das Wasser aus dem Bottich 1 abgelassen. Nun kann eine Zwischenspülphase durchgeführt werden, für welche Wasser über Ventil 26 in den Bottich geführt wird, ohne Wärme aus dem Sorptionstrockner 10 auszutragen.
- Danach wird über Ventil 27 in einer Klarspülphase ein zusätzliches Wasserbad eingespeist, um das Geschirr auf eine bestimmte Temperatur zu bringen, z.B. 40°C, und um Glanzmittel an die Oberflächen des Geschirrs zu bringen. Dabei wird Wärme aus dem Sorptionstrockner 10 an das Wasser übertragen.
- Danach beginnt die Trocknungsphase. Ventil 17 wird geöffnet und der Trockenluftventilator 15 wird in Betrieb genommen, so dass die Luft im Trockenkreislauf getrocknet und erwärmt wird. Dabei handelt es sich, wie bereits erwähnt, um einen geschlossenen Kreislauf, bei welchem die Luft aus dem Bottich 1 in das Sorptionsmedium 12 und von dort wieder zurück in den Bottich 1 gefördert wird. Dabei nimmt die Luft im Bottich 1 Feuchte vom Geschirr auf, und diese Feuchte wird im Sorptionsmedium 12 sorbiert, wobei gleichzeitig Wärme frei wird, welche die Wasseraufnahmefähigkeit der Luft erhöht.

Fig. 2 zeigt eine apparativ etwas einfachere, zweite Ausführung eines Geschirrspülers, bei welcher das Frischwasser nur über den Wasserbehälter 13 dem Bottich 1 zugeführt werden kann. Entsprechend können Ventil 26 und die zugehörige Leitung entfallen.

Bei dieser Ausführung wird beim ersten Einspeisen von Frischwasser und während der Desorptionsphase das Ventil 28 offen gehalten.

Nach der Desorptionsphase wird das Ventil 28 geschlossen und es werden mehrere Liter (bis zu z.B. vier Liter) Wasser in den Wasserbehälter 12 eingeführt (entsprechend ist der Wasserbehälter der Ausführung nach Fig. 2 vorzugsweise grösser als jener der Ausführung nach Fig. 1, was allerdings in den Figuren nicht dargestellt ist). Dieses Wasser kann Restwärme aus dem Sorptionsmedium 12 sowie der Sorptionskammer 11 aufnehmen und sich dabei erwärmen. Es kann sodann in einer späteren Phase des Prozesses, vorzugsweise in der Klarspülphase, dem Bottich 1 in bereits vorgewärmter Form zugeführt werden.

### Bemerkungen:

Die verschiedenen Schritte des hier beschriebenen Betriebsverfahrens werden über eine Steuerung gesteuert (nicht gezeigt). Diese enthält z.B. einen Mikroprozessor, der so programmiert ist, dass er die beschriebenen Schritte selbsttätig durchführt. Wenn in den Ansprüchen erwähnt wird, dass der Geschirrspüler zur Durchführung gewisser Schritte "ausgestaltet ist, so ist dies so zu verstehen, dass die Steuerung des Geräts so strukturiert ist, dass sie die Schritte selbsttätig durchführt.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Geschirrspüler mit
einem Bottich (1),
einem Sorptionsmedium (12), mit welchem Wasser unter Wärmeabgabe sorbierbar und unter Heizen desorbierbar ist,
einer Heizung (22) zum Erwärmen des Sorptionsmediums (12),
einem Trockenkreislauf (15, 16, 17) zum Zirkulieren von Luft zwischen dem Bottich (1) und dem Sorptionsmedium (12) zwecks Trocknung von Spülgut im Bottich (1),
wobei der Geschirrspüler dazu ausgestaltet ist, in einer Sorptionsphase Luft zwischen dem Bottich (1) und dem Sorptionsmedium (12) zirkulieren zu lassen, um Feuchte aus dem Bottich (1) auszutragen,
wobei der Geschirrspüler eine Frischluftzuführung (19, 20) aufweist, mit welcher Frischluft durch das Sorptionsmedium (12) in den Bottich (1) führbar ist, und
wobei der Geschirrspüler dazu ausgestaltet ist, in einer Desorptionsphase das Sorptionsmedium (12) zu heizen und über die Frischluftzuführung (19, 20) Frischluft durch das Sorptionsmedium (12) in den Bottich (1) zu führen, um Feuchte aus dem Sorptionsmedium (12) auszutragen,
**dadurch gekennzeichnet, dass** der Geschirrspüler einen Wasserbehälter (13) aufweist, welcher thermisch mit dem Sorptionsmedium (12) gekoppelt ist und von dem Wasser in den Bottich (1) leitbar ist, wobei der Geschirrspüler dazu ausgestaltet ist, in oder nach der Desorptionsphase Wasser in den Wasserbehälter (13) zu leiten und sodann das Wasser in den Bottich (1) zu leiten.

2. Geschirrspüler nach Anspruch 1, wobei der Bottich (1) eine Auslassöffnung (24) aufweist und der Geschirrspüler dazu ausgestaltet ist, in der Desorptionsphase durch die Auslassöffnung (24) Luft aus dem Bottich (1) abzugeben.

3. Geschirrspüler nach einem der vorangehenden Ansprüche, wobei er dazu ausgestaltet ist, zumindest einen Teil der Desorptionsphase mit leerem Wasserbehälter (13) durchzuführen.

4. Geschirrspüler nach einem der vorangehenden Ansprüche, wobei das Sorptionsmedium (12) in einer Sorptionskammer (11) angeordnet ist, und wobei die Sorptionskammer (11) mindestens teilweise vom Wasserbehälter (13) umgeben ist.

5. Verfahren zum Betrieb des Geschirrspülers nach einem der vorangehenden Ansprüche, wobei in einem Reinigungsprozess
in der Desorptionsphase dem Sorptionsmedium (12) Wärme zugeführt wird und Frischluft durch das Sorptionsmedium (12) in den Bottich (1) geführt und so Wärme und Feuchte in den Bottich (1) eingebracht wird, und,
später, im gleichen Reinigungsprozess, Luft zwischen dem Bottich (1) und dem Sorptionsmedium (12) umgepumpt und so dem Bottich (1) Feuchte entzogen wird
**dadurch gekennzeichnet, dass** nach der Desorptionsphase einem Wasserbehälter (13), welcher thermisch mit dem Sorptionsmedium (12) gekoppelt ist, Wasser zugeführt wird, das Wasser durch Wärme aus dem Sorptionsmedium (12) erwärmt wird und sodann das so erwärmte Wasser dem Bottich (1) zugeführt wird.

6. Verfahren nach Anspruch 5, wobei vor der Desorptionsphase Wasser dem Bottich (1) zugeführt wird, welches während der Desorptionsphase im Bottich (1) verbleibt.

7. Verfahren nach einem der Ansprüche 5 oder 6, wobei am Anfang der Desorptionsphase dem Sorptionsmedium (12) noch keine Frischluft zugeführt wird und erst wenn eine Temperatur im Sorptionsmedium (12) eine vorgegebene Schwelle erreicht hat, dem Sorptionsmedium (12) Frischluft zugeführt wird.

## Claims

1. Dishwasher with
a vat (1),
a sorption medium (12), by means of which water is sorbed by releasing heat and desorbed by heating up,
a heating (2) for heating up the sorption medium (12),
a dry circuit (15, 16, 17) for circulating air between the vat (1) and the sorption medium (12) with the aim of drying dishes inside the vat (1),
wherein the dishwasher is adapted to allow air to circulate between the vat (1) and the sorption medium (12) during a sorption phase, in order to extract humidity from the vat (1),
wherein the dishwasher has a fresh air supply (19, 20), by means of which fresh air is guided into the vat (1) through the sorption medium (12) and
wherein the dishwasher is adapted to heat up the sorption medium (12) in a desorption phase and to guide fresh air through the sorption medium (12) into the vat (1) via the fresh air supply (19, 20), in order to extract humidity from the sorption medium (12),
**characterized in that** the dishwasher has a water tank (13) which is thermally coupled to the sorption medium (12) and from which water is guided into the vat (1), wherein the dishwasher is adapted to guide water into the water tank (13) during or after the desorption phase and thereafter to guide the water into the vat (1).

2. Dishwasher according to claim 1, wherein the vat (1) has a discharge opening (24) and the dishwasher is adapted to release air from the vat (1) through the discharge opening (24) during the desorption phase.

3. Dishwasher according to one of the preceding claims, wherein it is adapted to carry out at least a part of the desorption phase with the water tank (13) being empty.

4. Dishwasher according to one of the preceding claims, wherein the sorption medium (12) is arranged inside a sorption chamber (11) and wherein the sorption chamber (11) is at least partially surrounded by the water tank (13).

5. Method for operating the dishwasher according to one of the preceding claims, wherein in a cleaning process
in the desorption phase heat is supplied to the sorption medium (12) and fresh air is guided into the vat (1) through the sorption medium (12) and in this way heat and humidity are inserted into the vat (1), and,
later, during the same cleaning process, air is pumped between the vat (1) and the sorption medium (12) and in this way humidity is extracted from the vat (1)
**characterized in that** after the desorption phase water is supplied to a water tank (13) which is thermally coupled to the sorption medium (12), the water being heated up by heat from the sorption medium (12) and thereafter the water heated up in this way is supplied to the vat (1).

6. Method according to claim 5, wherein prior to the desorption phase water is supplied to the vat (1) and remains in the vat (1) during the desorption phase.

7. Method according to one of the claims 5 or 6, wherein at the beginning of the desorption phase no fresh air is yet supplied to the sorption medium (12) and fresh air is only supplied to the sorption medium (12) when a temperature in the sorption medium has reached a prescribed threshold.

## Revendications

1. Lave-vaisselle avec
un récipient (1),
un médium de sorption (12), à l'aide duquel de l'eau est sorbée sous émission de chaleur et desorbée par chauffage,
un chauffage (22) pour chauffer le médium de sorption (12),
un circuit sec (15, 16, 17) pour circuler de l'air entre le récipient (1) et le médium de sorption (12) afin de sécher de la vaisselle dans le récipient (1),
le lave-vaisselle étant adapté à permettre de l'air à circuler entre le récipient (1) et le médium de sorption (12) pendant une phase de sorption, afin d'extraire de l'humidité du récipient (1),
le lave-vaisselle ayant une alimentation d'air frais (19, 20), à l'aide de laquelle de l'air frais est guidé à l'intérieur du récipient (1) à travers le médium de sorption (12) et
le lave-vaisselle étant adapté à chauffer le médium de sorption (12) dans une phase de désorption et à guider d'air frais dans le récipient (1) à travers le médium de sorption (12), afin d'extraire de l'humidité du médium de sorption (12),
**caractérisé en ce que** le lave-vaisselle a un récipient d'eau (13) thermiquement couplé au médium de sorption (12) et duquel de l'eau est guidée à l'intérieur du récipient (1), le lave-vaisselle étant adapté à guider de l'eau à l'intérieur du récipient d'eau (13) pendant ou après la phase de désorption et ensuite à guider l'eau à l'intérieur du récipient (1).

2. Lave-vaisselle selon la revendication 1, le récipient (1) ayant une ouverture de décharge (24) et le lave-vaisselle étant adapté à décharger d'air du récipient (1) à travers l'ouverture de décharge (24) pendant une phase de désorption.

3. Lave-vaisselle selon l'une des revendications précédentes, étant adapté à exécuter au moins une partie de la phase de désorption avec un récipient d'eau (13) vide.

4. Lave-vaisselle selon l'une des revendications précédentes, le médium de sorption (12) étant arrangé à l'intérieur d'une chambre de sorption (11) et la chambre de sorption (11) étant au moins partiellement entourée par le récipient d'eau (13).

5. Procédé d'utilisation du lave-vaisselle selon l'une des revendications précédentes, dans un processus de nettoyage
de la chaleur étant alimentée dans le médium de sorption (12) et d'air frais étant guidé à l'intérieur du récipient (1) à travers le médium de sorption (12) pendant la phase de désorption et de cette manière de l'eau et de la humidité étant transmises au récipient (1), et,
plus tard pendant le même processus de de nettoyage, d'air étant pompé entre le récipient (1) et le médium de sorption (12), de l'humidité étant ainsi extraite du récipient,
**caractérisé en ce qu'**après la phase de désorption de l'eau est alimentée dans un récipient d'eau (13), thermiquement couplé avec le médium de sorption (12), l'eau étant chauffée par une chaleur du médium de sorption (12) et ensuite l'eau ainsi chauffée étant alimentée dans le récipient (1).

6. Procédé selon la revendication 5, avant la phase de désorption de l'eau étant alimentée dans le récipient (1) et restant dans le récipient (1) pendant la phase désorption.

7. Procédé selon l'une des revendications 5 ou 6, au début de la phase de désorption aucun air frais n'est pas alimenté dans le médium de sorption (12) et de l'air frais étant uniquement alimenté au médium de sorption (12) quand une température dans le médium de sorption a atteint un seuil prescris.
